# FASCICULE DE BREVET EUROPEEN

(11) **EP 0 793 331 B1**
(45) Date de publication et mention de la délivrance du brevet: **08.05.2002**
(21) Numéro de dépôt: 97400447.5
(22) Date de dépôt: 27.02.1997
(51) Int. Cl.: H02K 15/00, H02K 15/12, H02K 3/12, H02K 13/04

(54) **Procédé de fabrication d'une partie tournante bobinée de machine électrique**
Verfahren zum Herstellen eines bewickelten Läufers einer elektrischen Maschine
Method for manufacturing a wound rotor of an electric machine

(30) Priorité: 28.02.1996 FR 9602465
(43) Date de publication de la demande: 03.09.1997
(73) Titulaire: VALEO SYSTEMES D'ESSUYAGE, 78321 La Verrière (FR)
(72) Inventeur: Santander, Eduardo, 94400 Vitry sur Seine (FR); Desesquelles, Pierre-François, 94240 L'Hay les Roses (FR); Pigeau, Jean-Michel, 91220 Bretigny sur Orge (FR); Templer, Dominique, 78370 Plaisir (FR)
(74) Mandataire: Le Forestier, Eric

(56) Documents cités:
- DE-A- 2 230 713
- DE-A- 4 341 354
- DE-B- 1 010 624
- DE-U- 8 908 910
- PATENT ABSTRACTS OF JAPAN vol. 004, no. 112 (E-021), 12 Août 1980 & JP 55 068850 A (MATSUSHITA ELECTRIC IND CO LTD), 23 Mai 1980,
- PATENT ABSTRACTS OF JAPAN vol. 003, no. 146 (E-156), 4 Décembre 1979 & JP 54 125414 A (MATSUSHITA ELECTRIC IND CO LTD), 28 Septembre 1979,
- PATENT ABSTRACTS OF JAPAN vol. 012, no. 080 (E-590), 12 Mars 1988 & JP 62 217842 A (KOKUSAN DENKI CO LTD), 25 Septembre 1987,
- PATENT ABSTRACTS OF JAPAN vol. 017, no. 071 (E-1319), 12 Février 1993 & JP 04 275050 A (FUJITSU GENERAL LTD), 30 Septembre 1992,

## Description

L'invention concerne une partie tournante de machine électrique, un moteur à courant continu pour véhicule automobile comprenant une telle partie tournante et un procédé de fabrication d'une telle partie tournante.

On connaît des moteurs à courant continu de motoventilateur de véhicule automobile, comportant un inducteur à aimants permanents et un induit bobiné. Cet induit présente un support et un bobinage de forme générale annulaire constitué de brins bobinés sur le support. La circulation d'un courant dans les brins placés dans le champ magnétique généré par l'inducteur fait naître une force de Laplace dans les brins qui provoque la rotation de l'induit autour de son axe. Les brins comportent des tronçons rectilignes, parallèles à l'axe de l'induit, et aux extrémités de ceux-ci des tronçons intermédiaires reliés au collecteur ou à un autre tronçon rectiligne. La force de Laplace apparaît, pour l'essentiel, uniquement dans les tronçons rectilignes.

Les tronçons intermédiaires inactifs sont disposés et assemblés entre eux aux faces d'extrémités axiales du bobinage pour occuper un espace réduit. Ils constituent ainsi des reliefs appelés chignons d'induit. L'encombrement des chignons suivant la direction axiale du moteur est important, et peut être égal à la longueur des tronçons rectilignes actifs. L'encombrement axial du moteur lui-même dépend donc pour une bonne part de l'encombrement axial des chignons. Or, dans l'industrie automobile, entre autres, il existe aujourd'hui une demande croissante pour des moteurs d'encombrement axial réduit.

Par ailleurs, la dimension du bobinage suivant la direction axiale, qui est importante, est assortie d'un intervalle de tolérance lui-même important. Il s'ensuit que les pièces du moteur adjacentes au bobinage occupent des positions tenant compte de cet intervalle de tolérance. L'encombrement axial du moteur est donc doublement augmenté.

En outre, la répartition en volume des brins parallèles à l'axe et des chignons est généralement peu régulière. Cette mauvaise répartition crée un déséquilibre en poids, ou balourd, qu'il est nécessaire de compenser en rééquilibrant l'induit après fabrication avant montage dans le moteur. Cette compensation constitue une opération d'autant plus délicate que le déséquilibre initial est important.

Un problème est donc de fournir un procédé de fabrication d'une partie tournante bobinée ayant des chignons présentant une dimension axiale réduite et un intervalle de tolérance réduit associé à cette dimension, et répartis de façon plus régulière que les chignons des parties tournantes précitées.

La traduction en anglais de l'abrégé du brevet japonais JP-4 275 050 (Fujitsu General LTD) concerne la fabrication d'un stator comprenant un paquet de tôles portant un bobinage. Ce document énonce de bobiner les brins sur le paquet de tôles, puis de disposer le paquet de tôles avec son bobinage dans une presse comportant deux mors ayant des faces de pressage annulaires coaxiales en regard. Le premier mors présente un noyau sur lequel on enfile le paquet de tôles avec son bobinage. A la fermeture de la presse, l'extrémité du noyau pénètre dans un évidement du deuxième mors destiné à cette fin. On rapproche alors les deux mors l'un de l'autre pour réaliser le pressage axial du bobinage.

Ainsi, l'effort de pressage provoque l'écrasement des chignons suivant la direction axiale et entraîne une réduction importante de l'encombrement axial du bobinage.

On sait toutefois que pour fabriquer la partie tournante, il est avantageux de procéder comme suit :
- fixer sur l'arbre le paquet de tôles nu ;
- puis fixer le collecteur sur l'arbre à une position provisoire à distance du paquet de tôles ;
- puis bobiner les brins à la fois sur le paquet de tôles et le collecteur ; et enfin
- rapprocher le collecteur du paquet de tôles pour le placer à sa position définitive.

Ce procédé facilite la réalisation du bobinage. Or l'enseignement de l'abrégé du document japonais précité, qui concerne un stator, est inutilisable dans ces conditions en raison de la présence de l'arbre et du collecteur sur la partie tournante.

Par ailleurs, le document JP-A-55 068 850 divulgue un procédé conforme au préambule de la revendication 1.

Un but de l'invention est de proposer un procédé de fabrication d'une partie tournante de machine électrique, permettant de réaliser le bobinage à la fois sur le paquet de tôles et le collecteur en position provisoire avant placement du collecteur en position définitive, tout en obtenant les avantages précités du pressage axial du bobinage, et ce sans altérer les brins du bobinage, notamment ceux directement reliés au collecteur.

En vue de la réalisation de ce but, on prévoit selon l'invention un procédé de fabrication d'une partie tournante bobinée pour machine électrique, selon la revendication 1.

Ainsi, la position provisoire du collecteur facilite la réalisation du bobinage sur le collecteur et le paquet de tôles. On obtient en outre tous les avantages du pressage axial du bobinage. De plus, certains brins ont une extrémité reliée au collecteur et une autre extrémité reliée à la face d'extrémité axiale du bobinage orientée vers le collecteur. Au cours du pressage axial du bobinage simultanément au déplacement du collecteur, les deux extrémités de ces brins sont déplacées dans le même sens suivant la direction axiale de l'arbre. Par conséquent, il n'apparaît entre ces deux extrémités aucune traction susceptible d'altérer ou de rompre le brin, et les excédents de brins adjacents au collecteur ne produisent pas des amas dont pourraient résulter des courts-circuits. Le risque de contacts, ou de chocs entre les brins est réduit. De façon générale, ce procédé permet d'éviter dans une large mesure la détérioration de la gaine isolante ou du vernis isolant des brins pendant le pressage, cette détérioration pouvant dans le cas contraire provoquer des courts-circuits entre les brins. On évite notamment que l'écrasement des brins ne provoque la coupure de certains d'entre eux.

Avantageusement, pour effectuer ledit pressage et ledit rapprochement, on sollicite directement deux faces d'extrémité axiale du bobinage et on sollicite directement le collecteur.

Ainsi, on évite de détériorer le bobinage et/ou le collecteur, ce qui serait le cas notamment si l'on sollicitait le bobinage par l'intermédiaire du collecteur.

Avantageusement, le procédé comprend durant le pressage la phase consistant à guider des tronçons de brins s'étendant depuis le collecteur jusqu'au paquet de tôles.

Ainsi, on évite encore davantage les inconvénients précités, pour les brins adjacents au collecteur, à savoir la formation d'amas, leur écrasement ou leur traction excessive, dont pourraient résulter a contrario l'altération de l'isolant des brins et des courts-circuits entre eux.

Avantageusement, la phase de guidage comprend l'opération consistant à maintenir chacun desdits tronçons de brin dans un plan radial fixe déterminé par rapport à l'arbre.

Il s'agit d'une façon particulièrement simple de réaliser ce guidage.

Avantageusement, on bobine sur le support des brins conducteurs comportant une gaine externe en matériau thermodurcissable, et durant l'étape de pressage, on chauffe le bobinage à une température au moins égale à la température de durcissement de ce matériau.

Ainsi, on immobilise les brins en position de pressage du bobinage. On prolonge donc la durée de vie de l'agencement des brins obtenu.

Avantageusement, on chauffe le bobinage en faisant circuler du courant électrique dans les brins.

Ainsi, il n'est pas besoin d'utiliser une presse munie en propre de moyens de chauffage.

Avantageusement, avant l'étape de pressage, on applique sur les brins une substance liquide chaude durcissable au refroidissement, et on prolonge l'étape de pressage jusqu'au refroidissement de la substance.

Il s'agit d'une autre façon d'obtenir l'immobilisation des brins en position pressée.

Par ailleurs, le document JP-A-04 275 050 divulgue une presse conforme au préambule de la revendication 8.

L'invention vise également une presse pour la fabrication d'une partie tournante bobinée pour machine électrique selon la revendication 8.

Cette presse permet de mettre en oeuvre le procédé selon l'invention. Cette presse peut assurer notamment le pressage du bobinage par contact direct des faces de pressage avec les faces d'extrémités axiales du bobinage. L'évidement présentant la face d'appui peut recevoir le collecteur, la face d'appui sollicitant le collecteur pour son déplacement depuis sa position provisoire jusqu'à sa position définitive.

Avantageusement, le deuxième mors présente une face d'appui de forme générale annulaire, coaxiale à la face de pressage, ayant un plus grand diamètre inférieur à celui de la face d'appui du premier mors et constituant un fond de l'évidement associé au deuxième mors

Cet évidement peut recevoir l'extrémité de l'arbre opposée au collecteur. Ainsi, le déplacement du collecteur est effectué en sollicitant l'un vers l'autre suivant la direction axiale le collecteur d'une part, et l'extrémité axiale de l'arbre opposée au collecteur d'autre part. Pour le déplacement du collecteur, il n'est donc pas besoin de solliciter davantage la face d'extrémité axiale du bobinage opposée au collecteur.

Avantageusement, au moins l'un des mors présente au moins un bord profilé de forme annulaire en plan, prolongeant la face de pressage et s'étendant en saillie de celle-ci en direction de l'autre mors, le bord ayant un profil en secteur d'ellipse ou de parabole, la face de pressage ayant un profil rectiligne tangent à un sommet de l'ellipse ou de la parabole.

Durant le pressage, ce bord assure un guidage des brins périphériques adjacents aux faces d'extrémités axiales du paquet de tôles. Le profil en ellipse ou en parabole permet de réaliser ce guidage en réduisant au maximum les risques d'écrasement des brins.

Avantageusement, le bord est prolongé par un autre profil courbe, la jonction entre les deux profils constituant un point d'inflexion.

Ainsi, on évite de réaliser à la fin du profil de guidage une arête saillante.

Avantageusement, la presse comporte des moyens de butée adaptés à limiter le déplacement relatif des mors en direction l'un de l'autre pour interdire le rapprochement relatif des faces de pressage en-deça d'une distance prédéterminée.

Ainsi, on prévient tout pressage excessif du bobinage dont pourrait résulter une altération irrémédiable des brins.

Avantageusement, les moyens de butée comprennent des faces de butée planes sur les mors, sensiblement perpendiculaires à l'axe, et adaptées à venir en contact l'une avec l'autre.

Avantageusement, la presse comporte au moins une série de reliefs adaptés à être disposés au voisinage de l'évidement en s'étendant en saillie d'un plan de la face de pressage du premier mors en direction du deuxième mors, les reliefs étant disposés sensiblement en un cercle coaxial à l'évidement, régulièrement autour de l'axe.

Ainsi, ces reliefs assurent durant le pressage le guidage des brins reliés au collecteur dont il a été question plus haut.

Avantageusement, les reliefs sont portés par le premier mors.

Avantageusement, la presse comporte un tiroir mobile à coulissement à travers le premier mors, par rapport à celui-ci, suivant la direction axiale, le tiroir portant les reliefs.

Ainsi, la position des reliefs peut être modifiée à volonté (par exemple pour disposer les reliefs plus ou moins en saillie) lors des différentes phases du pressage et/ou en fonction de la configuration de la partie tournante fabriquée.

Avantageusement, au moins les faces de pressage sont réalisées en acier, ces faces ayant subi un traitement superficiel tel qu'une cémentation, une nitruration, ou une carbonitruration.

En effet, il est avantageux que les mors présentent une certaine dureté superficielle, par exemple 55 à 60 HRC (Rockwell) ainsi que de bonnes qualités de glissement, de même qu'un bon état de surface, pour éviter de blesser les brins lors du pressage.

Par ailleurs, le document DE-1 010 624 divulgue une partie tournante conforme au préambule de la revendication 18.

On prévoit encore selon l'invention une partie tournante bobinée pour machine électrique, selon la revendication 18.

Ainsi, des reliefs de guidage des brins adjacents au collecteur sont portés par la partie tournante elle-même, en remplacement ou en supplément de ceux portés par la presse.

La plaque pourra être la joue ou l'étoile d'isolation disposée, comme il est connu, à chaque extrémité du paquet de tôles avant la réalisation du bobinage.

Avantageusement, les brins sont collés les uns aux autres au moyen d'un matériau appliqué sur les brins.

Avantageusement, il s'agit d'un induit de moteur à courant continu pour véhicule automobile.

Avantageusement, il s'agit d'un induit de motoventilateur.

On prévoit par ailleurs selon l'invention un moteur à courant continu pour véhicule automobile comportant une partie tournante selon l'invention.

D'autres caractéristiques et avantages de l'invention apparaîtront encore dans la description suivante d'un mode préféré de réalisation et de variantes donnés à titre d'exemples non limitatifs. Aux dessins annexés :
- la figure 1 est une vue en coupe axiale d'un moteur comportant un induit selon un mode préféré de réalisation de l'invention ;
- les figures 2 et 3 sont des vues en coupe axiale de la partie tournante de la figure 1 en cours de fabrication montrant deux stades de la mise en oeuvre du procédé selon un mode préféré de réalisation de l'invention ;
- la figure 4 est une vue de principe en coupe axiale d'une presse selon l'invention pour la mise en oeuvre du procédé des figures 2 et 3 ;
- la figure 5 est une vue partielle à échelle agrandie du détail D de la figure 4, montrant le premier mors seul ;
- la figure 6 est une vue détaillée en coupe analogue à la figure 4, montrant le premier mors seul ;
- la figure 7 est une vue de dessous du mors de la figure 6 montrant seulement la disposition des reliefs ;
- la figure 8 est une vue analogue à la figure 6, du premier mors et de la partie tournante, montrant une première variante de réalisation ;
- les figures 9 à 10 sont des vues analogues aux figures 2 et 3 montrant une deuxième variante de réalisation ;
- la figure 11 est une vue en plan d'une joue utilisée dans la deuxième variante des figures 9 et 10;
- les figures 12 et 13 sont des vues analogues aux figures 2 et 3 montrant une troisième variante de réalisation ; et
- la figure 14 est une vue partielle en coupe longitudinale d'un brin du moteur de la figure 1, selon une quatrième variante de réalisation.

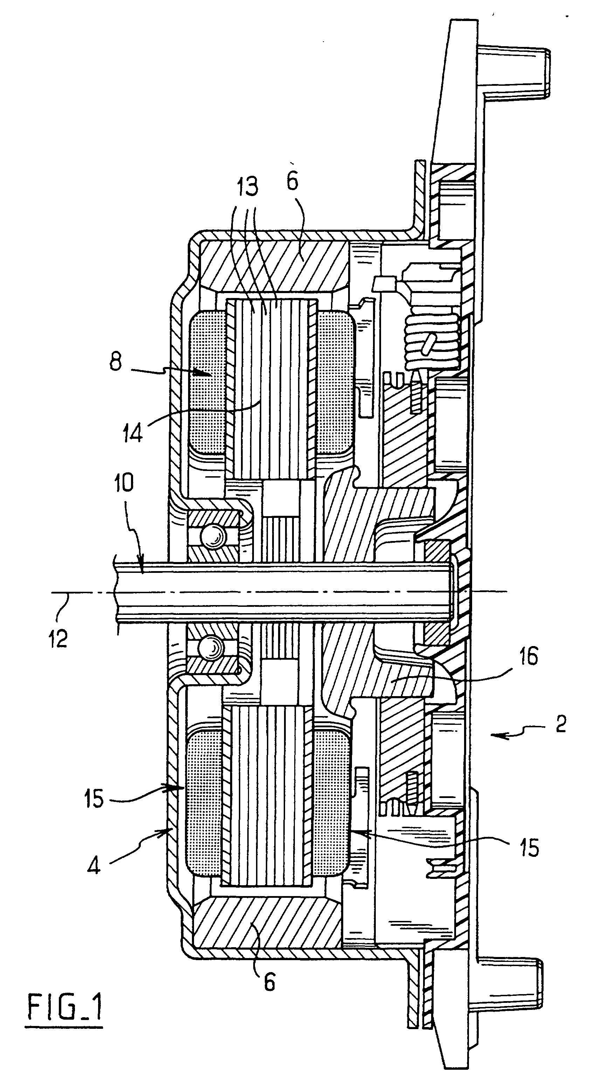

La figure 1 présente un moteur 2 à courant continu de motoventilateur pour véhicule automobile. Ce moteur comporte une carcasse fixe 4 et des aimants permanents 6 fixés intérieurement à la carcasse, la carcasse et les aimants constituant un inducteur du moteur. Le moteur comporte en outre un induit 8 selon l'invention constituant la partie tournante du moteur. L'induit 8 est fabriqué selon le procédé qui va être décrit ci-après.

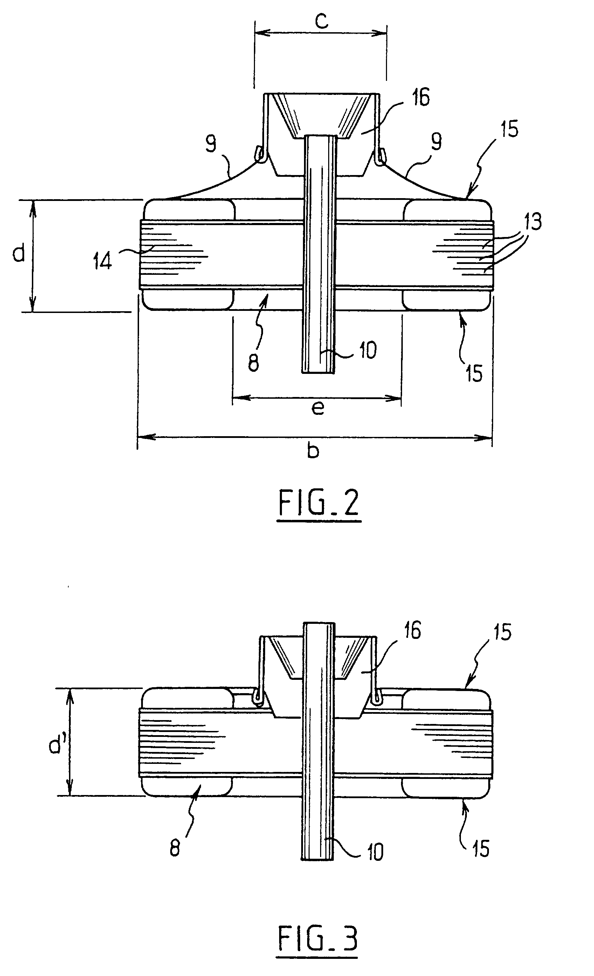

En référence notamment aux figures 1 et 2, on réalise un support d'induit 14 en disposant des tôles 13 de forme générale circulaire, parallèlement entre elles, concentriquement les unes contre les autres. On constitue ainsi un paquet de tôles de forme générale cylindrique d'axe 12. Ces tôles présentent des évidements radiaux externes constituant de par l'assemblage des tôles des encoches non représentées ayant un fond parallèle à l'axe 12 du cylindre. On fixe au paquet de tôles un arbre 10 traversant le paquet de tôles suivant son axe 12, et l'on fixe sur l'arbre 12 un collecteur 16 à une position provisoire à distance du paquet de tôles, comme sur la figure 2.

On bobine ensuite des brins 9 sur le paquet de tôles et le collecteur 16 de façon à réaliser un bobinage d'induit de forme générale annulaire. Ce bobinage a un plus grand diamètre b supérieur à un plus grand diamètre c du collecteur 16. De plus, il présente un évidement central axial ayant un diamètre e définissant un plus petit diamètre du bobinage. Le diamètre e de l'évidement est supérieur au plus grand diamètre c du collecteur 16. Chaque brin 9 comprend un fil de cuivre et une gaine isolante recouvrant le fil. Les brins 9 sont notamment engagés dans les encoches radiales du paquet de tôles. Les brins comportent ainsi des tronçons rectilignes parallèles à l'axe 12, s'étendant dans les encoches et destinés à provoquer la rotation de l'induit lorsque le brin est parcouru par un courant, sous l'effet du champ crée par l'inducteur. Les brins 9 comportent aussi des tronçons inactifs courbes, s'étendant aux extrémités des tronçons rectilignes actifs, et reliant les tronçons rectilignes entre eux, ou au collecteur, ou constituant des extrémités des brins. Les tronçons inactifs courbes sont assemblés et entrelacés pour constituer des chignons d'induit définissant deux faces d'extrémités axiales opposées 15 du bobinage. Sur chaque face d'extrémité, les chignons ont une disposition générale annulaire d'axe 12. Certains des brins 9 ont une première extrémité fixée au collecteur 16, par exemple par soudage, et une deuxième extrémité fixée à une face d'extrémité axiale 15 du bobinage orientée vers le collecteur 16.

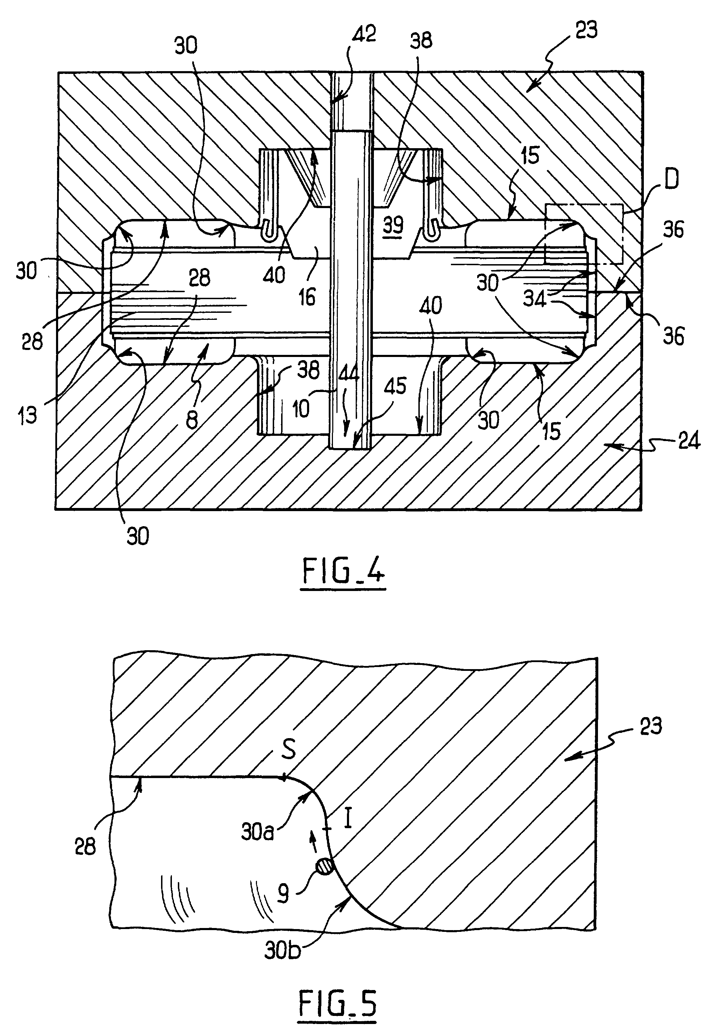

Une étape suivante du procédé met en oeuvre une presse selon l'invention telle que celle des figures 4 à 7.

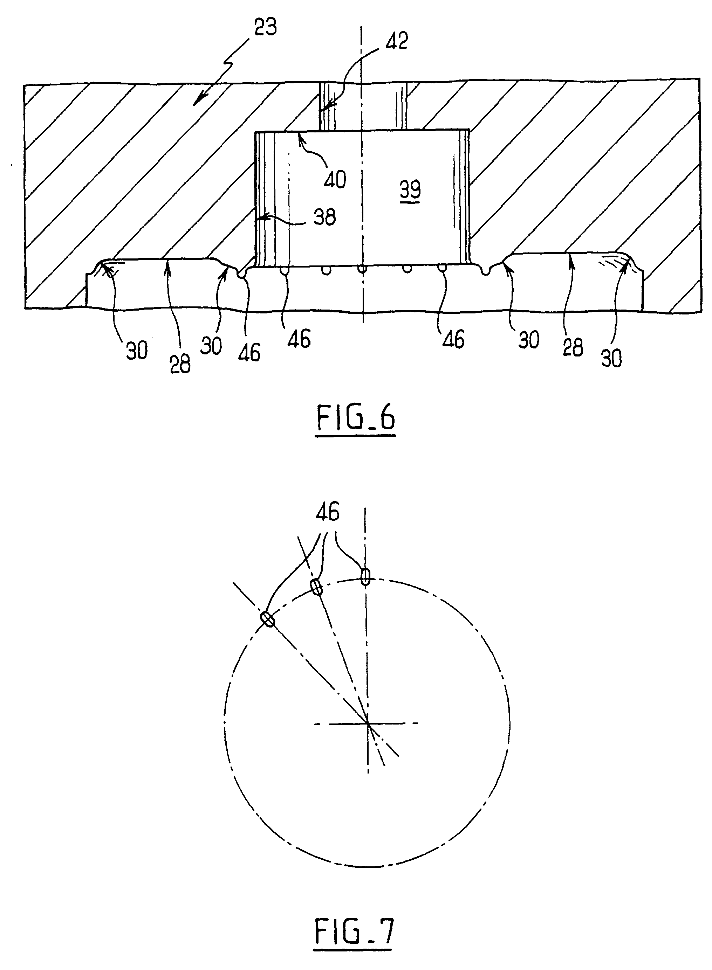

La presse comporte un premier mors 23 et un deuxième mors 24 en acier. Le premier mors 23 présente une face de pressage plane 28 de forme générale annulaire en plan, ayant un profil rectiligne. Le mors 23 présente deux bords externe et interne 30 contigus respectivement aux circonférences externe et interne de la face de pressage 28. Chaque bord 30 a une forme générale annulaire en plan et a un profil courbe présentant deux zones de profil 30a, 30b, ayant des courbures orientées dans des sens opposés, comme on le voit sur la figure 5. La première zone de profil 30a a une forme générale en secteur d'ellipse ou de parabole. Cette zone 30a est disposée de sorte que le profil rectiligne de la face de pressage 28 est tangent à la parabole ou à l'ellipse à un sommet S de celle-ci, le cas échéant, le sommet de l'ellipse étant ici considéré comme une extrémité du grand axe de l'ellipse. Ainsi, la première zone de profil 30a prolonge par une extrémité le profil rectiligne de la face de pressage 28. La deuxième zone de profil 30b s'étend dans le prolongement de l'autre extrémité de la première zone de profil 30a, la jonction entre les deux zones de profil étant constituée par un point d'inflexion I. La deuxième zone de profil 30b a également une forme en secteur d'ellipse ou de parabole. Lorsque la première ou la deuxième zone de profil a une forme en secteur d'ellipse, ce secteur est inférieur ou égal au quart de la circonférence de l'ellipse.

Le premier mors 23 présente une face latérale cylindrique 34 s'étendant à partir de l'autre extrémité de la deuxième zone de profil 30b associée au bord externe 30. La face cylindrique 34 est coaxiale à la face de pressage 28 et parallèle à son axe. Le premier mors 23 présente une face de butée annulaire plane 36 parallèle à la face de pressage 28, s'étendant à partir de la face latérale cylindrique 34, vers l'extérieur du mors, en étant localement perpendiculaire à cette face cylindrique 34. Le premier mors 23 présente une face cylindrique centrale 38 coaxiale à la face de pressage 28, parallèle à son axe et définissant un évidement 39 au centre de la face de pressage. La jonction entre la face cylindrique 38 et le bord interne 30 est constituée par un profil arrondi. Le bord interne 30 s'étend en saillie du plan de la face de pressage 28 de ce mors, en direction de l'autre mors 24. Le premier mors 23 présente une face d'appui 40 de forme annulaire plane, parallèle et coaxiale à la face de pressage 28, contiguë à la face cylindrique centrale 38, ayant un plus grand diamètre, ou diamètre externe, inférieur au diamètre de la circonférence interne de la face de pressage 28 (ou plus petit diamètre de celle-ci) en définissant un fond de l'évidement 39.

Pour les caractéristiques qui précèdent, le deuxième mors 24 est identique en forme et en dimensions au premier mors 23.

Le premier mors 23 présente en outre un canal cylindrique 42 s'étendant à partir du fond 40 de l'évidement 39, coaxialement à la face de pressage 28. Le deuxième mors 24 présente quant à lui un logement cylindrique borgne 44 s'étendant à partir du fond 40 de l'évidement associé, coaxialement à la face de pressage 28. En particulier, le logement borgne 44 présente une face de fond 45 de forme annulaire, et préférentiellement en forme de disque, ayant un plus grand diamètre inférieur à celui du fond 40 de l'évidement 39 du premier mors 23. Les deux mors 23, 24 sont disposés avec leurs faces de pressage 28 coaxiales, en regard et à distance l'une de l'autre.

La presse comporte des moyens classiques et connus en soi tels que des vérins adaptés à déplacer l'un des mors, par exemple le premier mors 23, parallèlement à la direction axiale par rapport à l'autre mors, par exemple le deuxième mors 24 fixe. Les deux faces de butée 36 des mors sont adaptées à venir en contact l'une avec l'autre pour constituer des moyens de butée limitant le déplacement relatif des mors en direction l'un de l'autre pour interdire le rapprochement relatif des faces de pressages 28 en-deçà d'une distance prédéterminée.

En référence aux figures 6 et 7, le bord interne 30 du premier mors 23 comporte une série de reliefs 46 allongés, à profil arrondis et s'étendant en saillie de ce bord en direction du deuxième mors 24, au voisinage de l'évidement 39. Les reliefs 46 sont disposés sensiblement en un cercle coaxial à la face de pressage 28, régulièrement autour de l'axe. La direction d'allongement des reliefs 46 est radiale à l'axe.

L'ensemble des faces précitées des mors ont subi un traitement de surface tel qu'une cémentation, une nitruration ou une carbonitruration, en vue de leur conférer une dureté importante, par exemple 55 à 60 HRC (Rockwell) et une bonne qualité de surface.

On utilise la presse de la façon suivante.

La presse étant ouverte avec le premier mors 23 distant du deuxième mors 24, on dispose dans la presse la partie tournante bobinée telle qu'elle se trouve à l'issue de l'étape de bobinage. Pour cela, on place la partie tournante coaxialement à la presse dans celle-ci. L'extrémité de l'arbre la plus éloignée du collecteur 16 est logée dans le logement borgne 44 du deuxième mors 24, le bobinage reposant par sa face d'extrémité axiale inférieure 15 sur la face de pressage 28 du deuxième mors 24. Quand on referme ensuite la presse, le collecteur 16 occupe l'évidement 39 du premier mors 23, à distance du fond 40 de celui-ci, l'extrémité de l'arbre adjacente au collecteur 16 s'étendant dans le canal 42 du premier mors. Les faces de butée 36 des mors sont distantes l'une de l'autre. La face de pressage 28 du premier mors 23 est en contact avec la face d'extrémité axiale supérieure 15 du bobinage.

On met alors la presse en marche. Le premier mors 23 se rapproche du deuxième mors 24 en coulissant, les faces de pressages 28 réalisant le pressage ou compactage du bobinage directement sur les faces d'extrémités axiales 15 du bobinage qui sont sollicitées suivant la direction axiale l'une vers l'autre, les faces de pressage étant en contact avec les faces d'extrémités axiales 15.

Au cours de ce pressage axial, les brins 9 s'étendant en périphérie du bobinage au voisinage des faces d'extrémités axiales 15 viennent au contact avec les bords externe et interne 30 des mors, comme sur la figure 5. Grâce à la forme précitée du profil de ces bords, les brins venant en contact avec ces bords sont guidés le long des bords en direction de l'axe des mors. Ces bords 30 assurent ainsi un pressage ou compactage des faces d'extrémités axiales 15 du bobinage suivant la direction radiale, en direction de l'axe. Ce pressage radial est effectué sans altérer les brins.

En même temps que se produit le pressage du bobinage, le fond 40 de l'évidement du premier mors 23 vient en appui suivant la direction axiale contre la face supérieure du collecteur 16 et le sollicite en direction du paquet de tôles. Le fond 45 du logement borgne 44 du deuxième mors 24 sollicite suivant la direction axiale, en sens opposé l'extrémité de l'arbre opposée au collecteur. Le rapprochement mutuel des mors entraîne le déplacement du collecteur 16 le long de l'arbre jusqu'à une position définitive plus proche du paquet de tôles que la position provisoire précédente. Dans cette position définitive, le collecteur s'étend en partie dans l'évidement central du bobinage.

En même temps que ce pressage du bobinage et ce déplacement du collecteur, les brins 9 ayant une extrémité reliée au collecteur 16 et une extrémité reliée à la face d'extrémité axiale 15 du bobinage voisine du collecteur, viennent au contact des reliefs 46 et s'insèrent entre les reliefs 46 à mesure que le premier mors 23 se rapproche du deuxième mors 24. Pendant toute la suite de ce rapprochement, ces brins demeurent entre les reliefs 46 et sont ainsi maintenus et guidés chacun dans un plan fixe déterminé radial à l'arbre de la partie tournante. On évite ainsi les amas, les chocs entre brins et l'écrasement de ceux-ci, ces brins ayant une configuration lâche après bobinage et avant pressage. Le bord interne 30 du premier mors permet de tendre les brins adjacents au collecteur.

A la fin du pressage, on ouvre la presse en éloignant à nouveau le premier mors du deuxième mors. On ôte la partie tournante. En référence à la figure 3, le bobinage présente des faces d'extrémités axiales 15 sensiblement planes. Les zones de bord dé ces faces ont une forme mâle complémentaire de celle femelle des bords externe et interne 30 des mors.

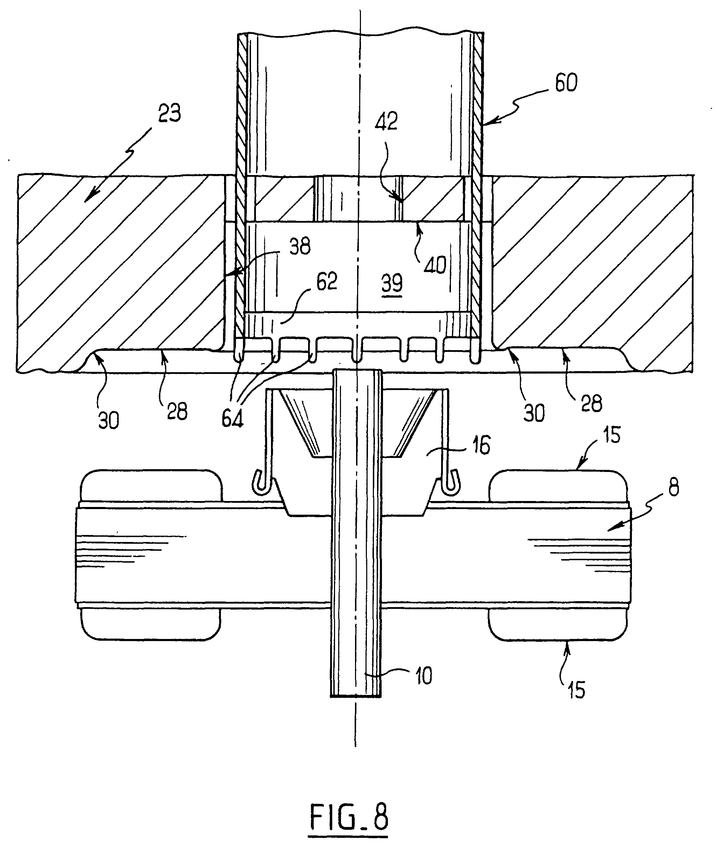

Dans une variante représentée à la figure 8, la presse comporte un tiroir 60 mobile à coulissement suivant la direction axiale, par rapport au premier mors 23 et à travers celui-ci. Le tiroir 60 comporte une couronne 62 présentant une série de reliefs 64 disposés régulièrement sur un cercle coaxial à l'axe et inscrit dans un plan perpendiculaire à l'axe. Le tiroir 60 est adapté à être déplacé de sorte que les reliefs 64 peuvent occuper une position où ils s'étendent en saillie du bord interne 30 du premier mors 23 en direction du deuxième mors 24, et une position où ils sont au contraire reculés par rapport au plan de la face de pressage 28 du premier mors. Le tiroir 60 est par exemple adapté pour que les reliefs 64 soient mobiles dans l'évidement 39 du premier mors 23, les reliefs étant voisins de la face cylindrique centrale 38.

Cette presse peut par exemple être utilisée de la façon suivante. Lors de la mise en place de la partie tournante dans la presse, les reliefs 64 sont en position reculée. A la fermeture de la presse, le tiroir 60 se déplace pour disposer les reliefs 64 en saillie du bord 30 comme précité, position que les reliefs conservent durant le pressage pour assurer le guidage des brins 9 comme décrit précédemment pour les reliefs fixés au bord. Avant ouverture de la presse, le tiroir 60 s'éloigne du deuxième mors 24 pour replacer les reliefs en position reculée.

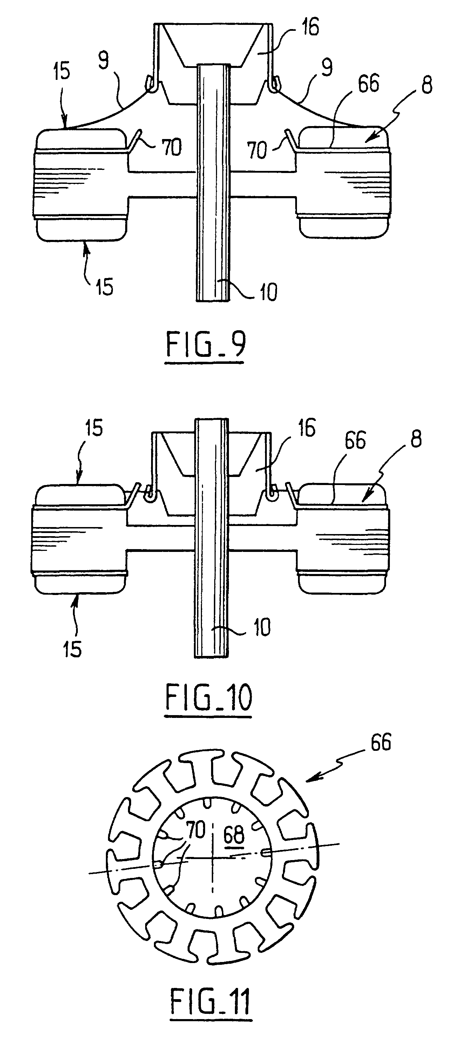

Dans la deuxième variante représentée aux figures 9 à 11, le paquet de tôles comprend, comme il est bien connu, deux plaques isolantes 66 en matière plastique disposées aux extrémités du paquet de tôles, parallèlement aux autres tôles. De telles plaques sont parfois appelées "joue" ou "étoile" et présentent une découpe identique à celle des autres tôles, en particulier une ouverture circulaire centrale 68.

Dans la présente variante, la joue 66 destinée à être la plus proche du collecteur 16 présente une série de plots 70 s'étendant à partir du bord de l'ouverture centrale 68 en étant régulièrement répartis autour de l'axe de la plaque. Les plots 70 ont une forme rectiligne allongée suivant la direction radiale en direction de l'axe et s'étendent en saillie d'une face de la joue. Celle-ci est disposée dans le paquet de tôles de sorte que les plots 70 sont orientés en direction du collecteur 16 et en direction opposée au paquet de tôles. Ils ont ainsi une disposition en tronc de cône. Le bobinage est réalisé de sorte que l'extrémité libre de chaque plot 70 s'étend sensiblement dans le plan général de la face d'extrémité axiale 15 correspondante du bobinage.

Durant le pressage dans la presse, ces plots 70 assurent le guidage des brins 9 reliés au collecteur 16, comme cela a été décrit précédemment. A l'issue du pressage, compte tenu de la position définitive du collecteur 16, les plots 70 se trouvent interposés radialement entre le collecteur 16 d'une part, et le bobinage et le paquet de tôles d'autre part.

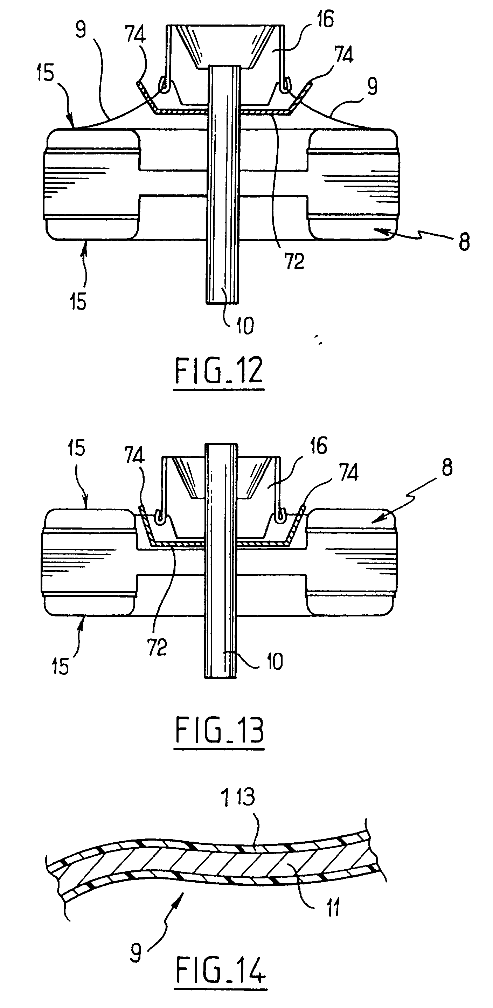

Dans la troisième variante représentée aux figures 12 et 13, la partie tournante comporte cette fois une rondelle 72 en matière plastique, coaxiale au collecteur 16 et fixée à celui-ci de sorte qu'une fois le collecteur enfilé sur l'arbre, la rondelle 72 est interposée suivant la direction axiale entre le collecteur et le paquet de tôles. La rondelle comporte un corps de rondelle de forme annulaire plane, et des plots 74 s'étendant en saillie d'une circonférence circulaire externe du corps de rondelle et d'une face de ce corps.

Les plots 74 sont allongés suivant une direction radiale à l'arbre et orientés en direction opposée à l'axe de la rondelle. La rondelle est disposée de sorte que les plots 74 s'étendent du côté du collecteur 16, le diamètre total de la rondelle au niveau des plots étant supérieur au diamètre du collecteur. Au cours du bobinage, les brins 9 adjacents au collecteur 16 sont insérés entre les plots 74.

Au cours du pressage, la rondelle 72 est déplacée d'un bloc avec le collecteur 16. Les plots 74 assurent le guidage des brins 9 précités comme décrit ci-dessus.

Dans la quatrième variante représentée à la figure 14, la gaine 113 des brins est constituée d'un matériau thermodurcissable et isolant de l'électricité. Par thermodurcissable, on entend comme il est bien connu, un matériau présentant une certaine souplesse à l'état brut et qui, lorsqu'il est chauffé à une température au moins égale à un seuil prédéterminé caractéristique du matériau, devient rigide, y compris après refroidissement.

Dans cette variante, durant l'étape de pressage, on fait circuler un courant électrique dans les brins 9 en alimentant le collecteur 16 de façon adaptée. Ce courant est choisi pour avoir une intensité suffisante pour chauffer le bobinage par effet JOULE jusqu'à une température égale ou supérieure à la température de durcissement du matériau constituant la gaine 113. Les brins 9 sont ainsi alimentés jusqu'à obtenir la polymérisation du matériau, dont résulte son durcissement.

Dès lors, on cesse d'alimenter les brins en courant électrique, et on met fin au pressage en ouvrant la presse. Le matériau des gaines 113 ayant été durci, il ne se produit pas de détente significative du bobinage, notamment des chignons, suivant l'axe 12 par effet ressort. Les gaines 113 maintiennent les chignons écrasés dans la position de pressage.

A l'issue du procédé selon l'invention dans le mode et les variantes précitées, les faces d'extrémités axiales 15 du bobinage sont planes et perpendiculaires à l'axe 12. Elles peuvent présenter des cavités entre certains chignons écrasés. Ces faces étant constituées par les chignons écrasés, elles présentent à l'échelle millimétrique l'aspect irrégulier généré par les brins 9 serrés les uns contre les autres. On a ainsi réduit la dimension axiale du bobinage. En outre, l'intervalle de tolérance à associer à cette dimension réduite d' du bobinage peut être lui-même sensiblement réduit par rapport à l'intervalle attaché à la dimension axiale d avant pressage. La réduction de l'intervalle de tolérance sera par exemple égale à la réduction de la dimension axiale, à savoir d-d'. Le gain de place réalisé sera donc égal à la somme de la réduction de la dimension axiale et de la réduction axiale de l'intervalle de tolérance, soit 2 x (d-d'). Le gain de place est donc égal au double de la réduction axiale effectuée sur les chignons. Ce gain de place est répercuté sur la position des pièces du moteur de la figure 1 adjacentes aux faces d'extrémités 15 du bobinage, et permet de réduire la dimension axiale du moteur.

Le pressage permet de réduire de façon importante l'intervalle de tolérance associé à la dimension axiale du bobinage. Ainsi, au total, le gain de place réalisé suivant la direction axiale de la partie tournante est égal à la somme de la réduction axiale des chignons et de la réduction de l'intervalle de tolérance. Ce gain de place permet à son tour de réduire l'encombrement axial total du moteur. En outre, l'écrasement des chignons améliore la répartition en volume des brins et des chignons dans le sens d'une plus grande régularité. Le déséquilibre à compenser sur la partie tournante est donc moins important que dans les parties tournantes connues précitées.

Le procédé selon l'invention permet de réduire encore le balourd de la partie tournante.

Bien entendu, on pourra apporter à l'invention de nombreuses modifications sans sortir du cadre de celle-ci.

On pourra chauffer les brins 9 lors du pressage sans les alimenter en courant, grâce à des moyens de chauffage adaptés.

On pourra par ailleurs utiliser des brins comportant une gaine en matériau isolant classique, et appliquer sur les brins avant l'étape de pressage une substance liquide chaude durcissable au refroidissement, telle qu'une résine ou une laque. On effectue alors le pressage du bobinage comme précité, sans chauffer le bobinage et on prolonge l'étape de pressage jusqu'au refroidissement de la substance. Une fois celle-ci refroidie et donc durcie, on met fin au pressage. L'induit comportera dès lors des brins collés les uns aux autres au moyen de ce matériau appliqué sur les brins.

L'invention est applicable à des parties tournantes de machines électriques telles que des moteurs à courant alternatif, des alternateurs ou des dynamos.

Le terme "effort de pressage" sera compris au sens large, comme couvrant toute sollicitation d'au moins une face d'extrémité axiale du bobinage par rapport à l'autre face en vue de son écrasement. Notamment, le pressage pourra être progressif ou brusque.

On pourra avantageusement combiner entre eux le mode de réalisation précité et les variantes en ce qui concerne leurs caractéristiques compatibles.

## Revendications

1. Procédé de fabrication d'une partie tournante bobinée (8) pour machine électrique, comprenant les étapes consistant à :
- fixer sur un arbre (10) un paquet de tôles (13) et un collecteur (16), le collecteur étant distant du paquet de tôles ;
- bobiner des brins conducteurs (9) sur le paquet de tôles (13) et le collecteur (16) pour réaliser un bobinage de forme générale annulaire; et
- rapprocher le collecteur du paquet de tôles,
**caractérisé en ce qu'**il comprend l'étape consistant à presser le bobinage suivant une direction axiale (12) du bobinage, simultanément à l'étape consistant à rapprocher le collecteur (16) du paquet de tôles (13).

2. Procédé selon la revendication 1, **caractérisé en ce que**, pour effectuer ledit pressage et ledit rapprochement, on sollicite directement deux faces d'extrémité axiale du bobinage et on sollicite directement le collecteur.

3. Procédé de fabrication selon l'une des revendications 1 ou 2, **caractérisé en ce qu'**il comprend durant le pressage la phase consistant guider des tronçons de brins (9) s'étendant depuis le collecteur (16) jusqu'au paquet de tôles (13).

4. Procédé de fabrication selon la revendication 3, **caractérisé en ce que** la phase de guidage comprend l'opération consistant à maintenir chacun desdits tronçons de brin (9) dans un plan radial fixe déterminé par rapport à l'arbre (10).

5. Procédé selon l'une quelconque des revendications 1 à 4, **caractérisé en ce qu'**on bobine des brins conducteurs (9) comportant une gaine externe en matériau thermodurcissable, et durant l'étape de pressage, on chauffe le bobinage à une température au moins égale à la température de durcissement de ce matériau.

6. Procédé selon la revendication 5, **caractérisé en ce qu'**on chauffe le bobinage en faisant circuler du courant électrique dans les brins (9).

7. Procédé selon l'une quelconque des revendications 1 à 6, **caractérisé en ce que**, avant l'étape de pressage, on applique sur les brins (9) une substance liquide chaude durcissable au refroidissement, et on prolonge l'étape de pressage jusqu'au refroidissement de la substance.

8. Presse pour la fabrication d'une partie tournante bobinée pour machine électrique, la presse comportant un premier mors (23) et un deuxième mors (24) présentant des faces de pressage (28) respectives de forme générale annulaire en plan, coaxiales entre elles et s'étendant en regard l'une de l'autre, la presse étant adaptée à déplacer relativement les deux mors (23, 24) à coulissement suivant la direction axiale des faces de pressage, chaque mors présentant un évidement (39, 44) au moins le premier mors (23) présentant une zone d'appui (40) de forme générale annulaire en plan, coaxiale à la face de pressage (28), ayant un plus grand diamètre inférieur à un plus petit diamètre de la face de pressage, **caractérisée en ce que** chaque évidement s'étend au centre de la face de pressage (28), la zone d'appui étant une face constituant un fond de l'évidement (39).

9. Presse selon la revendication 8, **caractérisée en ce que** le deuxième mors (24) présente une face d'appui (45) de forme générale annulaire, coaxiale à la face de pressage (28), ayant un plus grand diamètre inférieur à celui de la face d'appui (40) du premier mors (23) et constituant un fond de l'évidement (44) associé au deuxième mors (24).

10. Presse selon la revendication 8 ou 9, **caractérisée en ce qu'**au moins l'un des mors (23, 24) présente au moins un bord (30) profilé de forme annulaire en plan, prolongeant la face de pressage (28) et s'étendant en saillie de celle-ci en direction de l'autre mors, le bord ayant un profil (30a) en secteur d'ellipse ou de parabole, la face de pressage (28) ayant un profil rectiligne tangent à un sommet (S) de l'ellipse ou de la parabole.

11. Presse selon la revendication 10, **caractérisée en ce que** le bord (30) est prolongé par un autre profil courbe (30b), la jonction entre les deux profils (30a, 30b) constituant un point d'inflexion (I).

12. Presse selon l'une quelconque des revendications 8 à 11, **caractérisée en ce que** la presse comporte des moyens de butée (36) adaptés à limiter le déplacement relatif des mors (23, 24) en direction l'un de l'autre pour interdire le rapprochement relatif des faces de pressage (28) en-deça d'une distance prédéterminée.

13. Presse selon la revendication 12, **caractérisée en ce que** les moyens de butée (36) comprennent des faces de butée planes sur les mors, sensiblement perpendiculaires à l'axe, et adaptées à venir en contact l'une avec l'autre.

14. Presse selon l'une quelconque des revendications 8 à 13, **caractérisée en ce qu'**elle comporte au moins une série de reliefs (46, 64) adaptés à être disposés au voisinage de l'évidement en s'étendant en saillie d'un plan de la face de pressage (28) du premier mors (23) en direction du deuxième mors (24), les reliefs (46, 64) étant disposés sensiblement en un cercle coaxial à l'évidement, régulièrement autour de l'axe.

15. Presse selon la revendication 14, **caractérisée en ce que** les reliefs (46) sont portés par le premier mors (23).

16. Presse selon l'une quelconque des revendications 14 à 15, **caractérisée en ce qu'**elle comporte un tiroir (60) mobile à coulissement à travers le premier mors (23), par rapport à celui-ci, suivant la direction axiale, le tiroir portant les reliefs (64).

17. Presse selon l'une quelconque des revendications 9 à 16, **caractérisée en ce qu'**au moins les faces de pressage (28) sont réalisées en acier, ces faces ayant subi un traitement superficiel tel qu'une cémentation, une nitruration, ou une carbonitruration.

18. Partie tournante bobinée (8) pour machine électrique (2), comportant un arbre (10), un paquet de tôles (13) et un collecteur (16) fixés à l'arbre, un bobinage de forme générale annulaire comprenant des brins conducteurs (9) bobinés sur le paquet de tôles et le collecteur, et au moins une série de plots allongés (70; 74) disposés en un cercle coaxial à l'arbre (10) régulièrement autour de l'arbre, les plots étant orientés en direction sensiblement opposée au paquet de tôles (13) et étant adaptés à être interposés radialement entre le collecteur (16) et le bobinage, la partie tournante comportant une plaque isolante (66) portant les plots (70) **caractérisée en ce que** la plaque isolante est intégrée au paquet de tôles (13) parallèlement à celles-ci.

19. Partie tournante bobinée selon la revendication 18 **caractérisée en ce que** chaque brin (9) comporte une gaine externe (13) en matériau thermodurcissable.

20. Partie tournante bobinée selon l'une des revendications 18 à 19 **caractérisée en ce que** les brins (9) sont collés les uns aux autres au moyen d'un matériau appliqué sur les brins.

21. Partie tournante bobinée selon l'une quelconque des revendications 18 à 20 **caractérisée en ce qu'**il s'agit d'un induit (8) de moteur à courant continu pour véhicule automobile.

22. Partie tournante bobinée selon l'une quelconque des revendications 18 à 21, **caractérisée en ce qu'**il s'agit d'un induit (8) de motoventilateur (2).

23. Moteur à courant continu (2) pour véhicule automobile **caractérisé en ce qu'**il comporte une partie tournante selon l'une quelconque des revendications 18 à 22.

## Patentansprüche

1. Verfahren zur Herstellung eines spulengewickelten rotierenden Teils (8) für eine elektrische Maschine, das Arbeitsschritte umfaßt, die darin bestehen:
- auf einer Welle (10) ein Blechpaket (13) und einen Kommutator (16) zu befestigen, wobei der Kommutator zum Blechpaket beabstandet ist;
- leitende Adern (9) auf dem Blechpaket (13) und dem Kommutator (16) aufzuwickeln, um eine insgesamt ringförmige Wicklung auszuführen; und
- den Kommutator an das Blechpaket anzunähern.
**dadurch gekennzeichnet, daß** es einen Arbeitsschritt umfaßt, der darin besteht, die Wicklung entlang einer axialen Richtung (12) der Wicklung gleichzeitig mit dem Arbeitsschritt, der in der Annäherung des Kommutators (16) an das Blechpaket (13) besteht, zu pressen.

2. Verfahren nach Anspruch 1, **dadurch gekennzeichnet, daß** zur Ausführung der besagten Pressung und der besagten Annäherung zwei axiale Abschlußflächen der Wicklung direkt beaufschlagt werden und der Kommutator direkt beaufschlagt wird.

3. Verfahren nach einem der Ansprüche 1 oder 2, **dadurch gekennzeichnet, daß** es während der Pressung die Phase umfaßt, die darin besteht, Aderteilstücke (9) zu führen, die sich vom Kommutator (16) aus bis zum Blechpaket (13) erstrecken.

4. Verfahren nach Anspruch 3, **dadurch gekennzeichnet, daß** die Führungsphase den Vorgang umfaßt, der darin besteht, jedes der besagten Aderteilstücke (9) in einer im Verhältnis zur Welle (10) bestimmten festen radialen Ebene zu halten.

5. Verfahren nach einem der Ansprüche 1 bis 4, **dadurch gekennzeichnet, daß** leitende Adern (9) aufgewickelt werden, die eine Außenhülle aus einem wärmaushärtenden Werkstoff umfassen, und während des Preßvorgangs die Wicklung auf eine Temperatur erhitzt wird, die wenigstens gleich der Härtetemperatur dieses Werkstoffs ist.

6. Verfahren nach Anspruch 5, **dadurch gekennzeichnet, daß** die Wicklung erhitzt wird, indem man einen elektrischen Strom in den Adern (9) fließen läßt.

7. Verfahren nach einem der Ansprüche 1 bis 6, **dadurch gekennzeichnet, daß** vor dem Preßvorgang auf die Adern (9) eine bei der Abkühlung aushärtbare warme flüssige Substanz aufgebracht wird und der Preßvorgang bis zur Abkühlung der Substanz verlängert wird.

8. Presse zur Herstellung eines spulengewickelten rotierenden Teils für eine elektrische Maschine, wobei die Presse eine erste Spannbacke (23) und eine zweite Spannbacke (24) umfaßt, die jeweils in der Draufsicht insgesamt ringförmige Preßflächen (28) aufweisen, die koaxial zueinander sind und sich einander gegenüber erstrecken, wobei die Presse die beiden Spannbacken (23, 24) gleitend entlang der axialen Richtung der Preßflächen relativ verschieben kann, wobei jede Spannbacke eine Ausnehmung (39, 44) aufweist, wobei wenigstens die erste Spannbacke (23) einen zur Preßfläche (28) koaxialen, in der Draufsicht insgesamt ringförmigen Auflagebereich (4) aufweist, dessen größter Durchmesser kleiner als ein kleinster Durchmesser der Preßfläche ist, **dadurch gekennzeichnet, daß** sich jede Ausnehmung in der Mitte der Preßfläche (28) erstreckt, wobei der Auflagebereich eine Fläche ist, die einen Boden der Ausnehmung (39) bildet.

9. Presse nach Anspruch 8, **dadurch gekennzeichnet, daß** die zweite Spannbacke (24) eine zur Preßfläche (28) koaxiale, insgesamt ringförmige Auflagefläche (45) aufweist, die einen größeren Durchmesser hat, der kleiner als derjenige der Auflagefläche (40) der ersten Spannbacke (23) ist, und die einen Boden der zur zweiten Spannbacke (24) gehörenden Ausnehmung (44) bildet.

10. Presse nach Anspruch 8 oder 9, **dadurch gekennzeichnet, daß** wenigstens eine der Spannbacken (23, 24) wenigstens einen in der Draufsicht ringförmigen profilierten Rand (30) aufweist, der die Preßfläche (28) verlängert und sich von dieser aus in Richtung der anderen Spannbacke vorstehend erstreckt, wobei der Rand ein Profil (30a) in Form eines Ellipsen- oder Parabelsektors hat, während die Preßfläche (28) ein einen Scheitel (S) der Ellipse bzw. der Parabel berührendes geradliniges Profil besitzt.

11. Presse nach Anspruch 10, **dadurch gekennzeichnet, daß** der Rand (30) durch ein anderes gekrümmtes Profil (30b) verlängert wird, wobei der Übergang zwischen den beiden Profilen (30a, 30b) einen Wendepunkt (I) bildet.

12. Presse nach einem der Ansprüche 8 bis 11, **dadurch gekennzeichnet, daß** die Presse Anschlagmittel (36) umfaßt, die die relative Verschiebung der Spannbacken (23, 24) in Richtung zueinander begrenzen können, um die relative Annäherung der Preßflächen (28) über einen vorbestimmten Abstand hinaus zu verhindern.

13. Presse nach Anspruch 12, **dadurch gekennzeichnet, daß** die Anschlagmittel (36) ebene Anschlagflächen an den Spannbacken umfassen, die in etwa senkrecht zur Achse verlaufen und miteinander in Kontakt kommen können.

14. Presse nach einem der Ansprüche 8 bis 13, **dadurch gekennzeichnet, daß** sie wenigstens eine Reihe von Erhebungen (46, 64) umfaßt, die in der Nähe der Ausnehmung angeordnet sein können, wobei sie sich von einer Ebene der Preßfläche (28) der ersten Spannbacke (23) aus in Richtung der zweiten Spannbacke (24) vorstehend erstrecken, wobei die Erhebungen (46, 64) in etwa in einem zur Ausnehmung koaxialen Kreis, gleichmäßig um die Achse herum, angeordnet sind.

15. Presse nach Anspruch 14, **dadurch gekennzeichnet, daß** die Erhebungen (46) an der ersten Spannbacke (23) angebracht sind.

16. Presse nach einem der Ansprüche 14 bis 15, **dadurch gekennzeichnet, daß** sie einen Einschub (60) umfaßt, der durch die erste Spannbacke (23) hindurch, im Verhältnis zu dieser, entlang der axialen Richtung gleitend beweglich ist, wobei der Einschub die Erhebungen (64) trägt.

17. Presse nach einem der Ansprüche 9 bis 16, **dadurch gekennzeichnet, daß** wenigstens die Preßflächen (28) aus Stahl ausgeführt sind, wobei diese Flächen einer Oberflächenbehandlung, wie etwa Zementieren, Nitrieren oder Karbonitrieren, unterzogen wurden.

18. Spulengewickelter rotierender Teil (8) für eine elektrische Maschine (2), umfassend eine Welle (10), ein Blechpaket (13) und einen . an der Welle befestigten Kommutator (16), wobei eine insgesamt ringförmige Wicklung leitende Adern (9), die auf dem Blechpaket und dem Kommutator aufgewickelt sind, und wenigstens eine Reihe von langgestreckten Ansätzen (70; 74) umfaßt, die in einem zur Welle (10) koaxialen Kreis gleichmäßig um die Welle herum angeordnet sind, wobei die Ansätze in einer zum Blechpaket (13) in etwa entgegengesetzten Richtung ausgerichtet sind und radial zwischen dem Kommutator (16) und der Wicklung eingefügt werden können, wobei der rotierende Teil eine Isolierplatte (66) umfaßt, die die Ansätze (70) trägt, **dadurch gekennzeichnet, daß** die Isolierplatte in das Blechpaket (13) parallel zu diesem integriert ist.

19. Spulengewickelter rotierender Teil nach Anspruch 18, **dadurch gekennzeichnet, daß** jede Ader (9) eine Außenhülle (13) aus einem warmaushärtenden Werkstoff umfaßt.

20. Spulengewickelter rotierender Teil nach einem der Ansprüche 18 bis 19, **dadurch gekennzeichnet, daß** die Adern (9) mittels eines auf die Adern aufgebrachten Materials aneinandergeklebt sind.

21. Spulengewickelter rotierender Teil nach einem der Ansprüche 18 bis 20, **dadurch gekennzeichnet, daß** es sich um einen Anker (8) eines Gleichstrommotors für Kraftfahrzeuge handelt.

22. Spulengewickelter rotierender Teil nach einem der Ansprüche 18 bis 21, **dadurch gekennzeichnet, daß** es sich um einen Anker (8) eines Lüfteraggregats (2) handelt.

23. Gleichstrommotor (2) für Kraftfahrzeuge, **dadurch gekennzeichnet, daß** er einen rotierenden Teil nach einem der Ansprüche 18 bis 22 umfaßt.

## Claims

1. Process to manufacture a wound rotor (8) for electric machines, comprising the stages consisting of
- fixing onto a shaft (10) a bundle of plates (13) and a collector (16), the collector being at a distance from the bundle of plates ;
- winding conductor wires (9) on the bundle of plates (13) and the collector (16) to produce a winding of general annular form; and
- bringing together the collector and the bundle of plates
**characterised in that** it comprises the stage consisting of pressing the winding along an axial direction (12) of the winding, simultaneously with the stage of bringing together the collector (16) and the bundle of plates (13).

2. Process according to claim 1, **characterised in that**, to carry out the said pressing and the said bringing together, two axial end faces of the winding are pulled directly and the collector is pulled directly.

3. Manufacturing process according to one of claims 1 or 2, **characterised in that** it comprises during the pressing the phase consisting of guiding the lengths of wires (9) extending from the collector (16) up to the bundle of plates (13).

4. Manufacturing process according to claim 3, **characterised in that** the guiding phase comprises the operation of maintaining each of the said lengths of wire (9) on a fixed radial plane determined in relation to the shaft (10).

5. Process according to any one of claims 1 to 4, **characterised in that** the conductor wires (9) comprising an external sheath made of thermosetting material are wound and during the pressing stage, the winding is heated to a temperature at least equal to the setting temperature of this material.

6. Process according to claim 5, **characterised in that** the winding is heated by allowing electric current to pass through the wires (9).

7. Process according to any one of claims 1 to 6, **characterised in that**, before the pressing stage, a hot liquid substance which sets when cooling is applied to the wires (9), and the pressing stage is extended until the substance is cooled down.

8. Press to manufacture a wound rotor for electric machines, the press comprising a first jaw (23) and a second jaw (24) having respective pressing faces (28) of a general annular form in elevational view, coaxial between them, and extending facing each other, the press being adapted to move the two sliding jaws (23, 24) relatively along the axial direction of the pressing faces, each jaw having a recess (39, 44), at least the first jaw (23) having a support zone (40) of general annular form in elevational view, coaxial to the pressing face (28), having a greater diameter below a smaller diameter of the pressing face, **characterised in that** each recess extends at the centre of the pressing face (28), the support zone being a face constituting one back of the recess (39).

9. Press according to claim 8, **characterised in that** the second jaw (24) has a support face (45) of general annular form, coaxial to the pressing face (28), having a greater diameter below that of the support face (40) of the first jaw (23) and constituting a back of the recess (44) associated with the second jaw (24).

10. Press according to claim 8 or 9, **characterised in that** at least one of the jaws (23, 24) presents at least one profiled edge (30) of annular form in elevational view prolonging the pressing face (28) and extending by protruding from the latter in the direction of the other jaw, the edge having an elliptical or parabolic sector profile (30a), the pressing face (28) having a rectangular profile tangential with the top (S) of the ellipsis or parabola.

11. Press according to claim 10, **characterised in that** the edge (30) is prolonged by another curved profile (30b), the junction between the two profiles (30a, 30b) constituting a point of inflection (I).

12. Press according to any one of claims 8 to 11, **characterised in that** the press comprises means of arresting (36) adapted to limit the relative movement of the jaws (23, 24) in one or other direction to prevent the pressing faces (28) coming together relatively beyond a predetermined distance.

13. Press according to claim 12, **characterised in that** the means of arresting (36) comprise flat striking faces on the jaws, roughly perpendicular to the axis, and adapted to allow one to come into contact with the other.

14. Press according to any one of claims 8 to 13, **characterised in that** it comprises at least one series of reliefs (46, 64) adapted to be arranged in the vicinity of the recess, extending by protruding from a plane of the pressing face (28) of the first jaw (23) in the direction of the second jaw (24), the reliefs (46, 64) being arranged roughly in a circle coaxial to the recess, in a regular fashion around the axis.

15. Press according to claim 14, **characterised in that** the reliefs (46) are borne by the first jaw (23).

16. Press according to any one of claims 14 to 15, **characterised in that** it comprises a slide (60) moving through the first jaw (23), in relation to the latter, along the axial direction, the slide bearing the reliefs (64).

17. Press according to any one of claims 9 to 16, **characterised in that** at least the pressing faces (28) are made from steel, these faces having undergone surface treatment such as cementation, nitriding or carbonitriding.

18. Wound rotor (8) for electric machines (2), comprising a shaft (10), a bundle of plates (13) and a collector (16) fixed to the shaft, a winding of general annular form comprising conductor wires (9) wound on the bundle of plates and the collector and at least one series of elongated contacts (70; 74), arranged in a circle coaxial to the shaft (10) in a regular fashion around the shaft, the contacts being orientated in a direction roughly opposed to the bundle of plates (13) and adapted to be interspaced radially between the collector (16) and the winding, the rotor comprising an insulating plate (66) carrying the contacts (70), **characterised in that** the insulating plate is integrated with the bundle of plates (13) parallel with these.

19. Wound rotor according to claim 18, **characterised in that** each wire (9) comprises an external sheath (13) made of thermosetting material.

20. Wound rotor according to one of claims 18 to 19, **characterised in that** the wires (9) are bonded to each other by means of a material applied to the wires.

21. Wound rotor according to any one of claims 18 to 20, **characterised in that** it relates to a DC motor armature (8) for motor vehicles.

22. Wound rotor according to any one of claims 18 to 21, **characterised in that** it relates to an armature (8) of an engine cooling fan (2).

23. DC motor (2) for motor vehicles, **characterised in that** it comprises a rotor according to any one of claims 18 to 22.
